# EUROPÄISCHE PATENTANMELDUNG

(11) **EP 1 321 385 A1**
(43) Veröffentlichungstag der Anmeldung: **25.06.2003**
(21) Anmeldenummer: 02102826.1
(22) Anmeldetag: 19.12.2002
(51) Int. Cl.: B65G 1/08, B65G 47/88

(54) **Schwerkraftstaurollenbahn**

(30) Priorität: 20.12.2001 AT 20042001
(71) Anmelder: Neukam, Helmut, Ing., 8020 Graz (AT)
(72) Erfinder: Neukam, Helmut, Ing., 8020 Graz (AT)
(74) Vertreter: KLIMENT & HENHAPEL

(57) **Zusammenfassung**

Stauvorrichtung (1) zur Aufnahme, Beförderung und stückweisen Ausgabe von Warenstücken (8), mit einer schräggestellten, in einem Gestell gehaltene Rollenbahn (2), die an ihrem unteren Ende einen Anschlag (3) aufweist, an welchem die entlang der Rollenbahn (2) heranbeförderten Warenstücke (8) zur Anlage kommen, wobei ein Auswerfer vorgesehen ist. Um eine Stauvorrichtung zu schaffen, welche lediglich eine geringe Neigung zur Horizontalen aufweist, ohne das Nachrutschen der Warenstücke zu behindern, ist vorgesehen, dass dass der Anschlag (3) gestellfest zur Rollenbahn (2) ausgebildet ist und der Auswerfer als ein im wesentlichen senkrecht zur Rollenbahn bewegbarer Hubabschnitt ausgebildet ist, der zum Heben der einzelnen Warenstücke (8) über den Anschlag (3) vorgesehen ist, wobei dieser Hubabschnitt durch zumindest die letzte Rolle vor dem gestellfesten Anschlag (3) gebildet ist, vorzugsweise aber durch einen variablen Zusammenschluss einer Anzahl von Rollen vor dem Anschlag (3).

## Beschreibung

Die vorliegende Erfindung bezieht sich auf eine Stauvorrichtung gemäß dem Oberbegriff des Anspruchs 1.

Solche Stauvorrichtungen finden beispielsweise in Kommissioniersystemen Verwendung und dienen als Lager für die zu kommissionierenden Waren. Gleichzeitig dienen sie als Ausgabevorrichtung bzw. Nachfördervorrichtung. Zu kommissionierende Waren werden daher vorerst hintereinander in den Stauvorrichtungen gelagert. Nach Ausgabe der ersten Ware in der Reihe, werden die anderen automatisch nachgefördert, um die entstandene Lücke wieder zu schließen.

Eine bekannte Stauvorrichtung ist als schräg geneigter, nach oben offener Schacht ausgebildet, der an seinem tiefsten Punkt einen die Förderfläche begrenzenden Fixanschlag aufweist. Als Förderfläche dient der Schachtboden, auf welchem die Waren durch die Neigung und Schwerkraft in Richtung Fixanschlag rutschen. Um die hohe Reibung zwischen den Produkten und dem Schachtboden zu überwinden und ein Nachfördern der Produkte zu ermöglichen, ist eine starke Neigung des Schachtbodens erforderlich. In der Praxis ist eine Neigung zwischen 20° und 40° zur Horizontalen verwirklicht. Eine geringere Neigung würde zur Folge haben, dass die Waren nach Ausgabe der ersten Ware in der Reihe nicht automatisch nachrutschen würden.

Die Ausgabe erfolgt bei dieser bekannten Stauvorrichtung automatisiert. Jener unmittelbar vor dem Fixanschlag befindliche Abschnitt der Förderfläche (= Hubabschnitt) ist in eine Richtung im wesentlichen rechtwinkelig zur Förderichtung bewegbar, so dass die jeweils erste (am Fixanschlag anstehende) Ware, über den Fixanschlag gehoben werden kann. Von dort rutscht sie dann aufgrund der Neigung der Förderfläche der Stauvorrichtung automatisch zur nächsten Fördereinrichtung beispielweise auf ein Förderband.

Nachteilig dabei ist die erforderliche starke Neigung der Förderfläche. Da mehrere solche Stauvorrichtung übereinander angeordnet sind, bedingen solche bekannten Stauvorrichtungen, dass das gesamte System sehr hoch baut. Ein weiterer Nachteil ist die Tatsache, dass der Hubabschnitt der Förderfläche eine fixe Länge aufweist, so dass eine Einstellung auf unterschiedlich große Produkte nicht möglich ist. Beim Einsatz eines in seiner Länge kleinen Hubabschnitts kann es daher passieren, dass eher lange Produkte nicht über den Fixanschlag gehoben werden und daher auch nicht weiterbefördert werden können.

Aus der DE 199 48 574 A ist des weiteren eine Stauvorrichtung bekannt, bei welcher ein kippbarer Auswerfer vorgesehen ist, der jedoch in seiner Länge nicht variierbar ist und daher umfangreiche Änderungen erforderlich sind, falls Waren unterschiedlicher Länge ausgeworfen werden sollen.

Es ist daher die Aufgabe der vorliegenden Erfindung, diese Nachteile zu verhindern und eine Stauvorrichtung der eingangs erwähnten Art vorzuschlagen, welche lediglich eine geringe Neigung zur Horizontalen aufweist, ohne das Nachrutschen der Warenstücke zu behindern. Es ist eine weitere Aufgabe der vorliegenden Erfindung, die Länge des Hubabschnitts variabel zu gestalten, um die unterschiedlich großen Warenstücke besser über den Fixanschlag befördern zu können.

Erfindungsgemäß wird dies durch das kennzeichnende Merkmal des Anspruchs 1 erreicht.

Durch Ausbildung der Förderfläche einer solchen Stauvorrichtung als Röllchenbahn, kann die Neigung der Stauvorrichtung gegenüber bekannten solchen Vorrichtungen stark reduziert werden. Durch das Anheben jenes(r), sich unmittelbar vor dem Fixanschlag befindlichen Röllchen, können die Warenstücke, im wesentlichen unabhängig von ihrer Länge, über den Fixanschlag gehoben und weiterbefördert werden.

Durch das kennzeichnende Merkmal des Anspruchs 2 werden die auf einen gehobenen Hubabschnitt auflaufenden Warenstücke abgebremst. Das Verklemmen des Hubabschnitts während des Zurückfahrens in seine Ruheposition durch nachfolgende Warenstücke kann somit verhindert werden.

Durch das kennzeichnende Merkmal des Anspruchs 3 wird der ausgefahrene Hubabschnitt erst dann wieder in seine Ruheposition versenkt, wenn sichergestellt ist, dass sich kein Warenstück mehr auf ihm befindet.

Durch das kennzeichnende Merkmal des Anspruchs 4 kann die Hubplatte mit einer unterschiedlichen Anzahl an Röllchen bestückt werden, wodurch der effektiv mit den Warenstücken in Kontakt tretende Bereich der Förderfläche in seiner Länge variierbar ist. Als Grenze wirkt hier lediglich die Länge der Hubplatte.

Das kennzeichnende Merkmal des Anspruchs 7 beschreibt eine bevorzugte Ausführungsform des Antriebs des Hubabschnitts.

Im Anschluss erfolgt nun eine detaillierte Beschreibung der Erfindung. Dabei zeigt
- Fig.1: eine Stauvorrichtung mit Hubabschnitt in Ruheposition

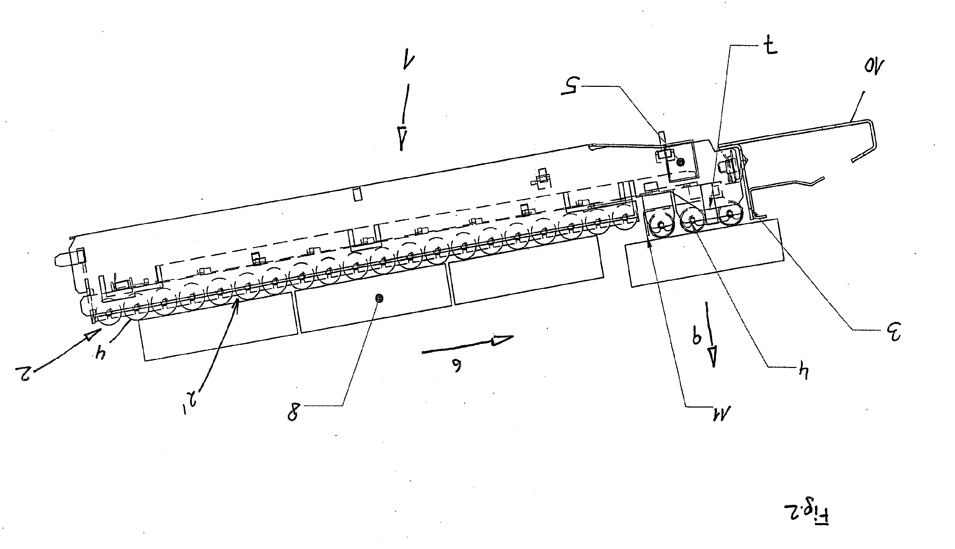

- Fig.2: eine Stauvorrichtung mit Hubabschnitt in ausgefahrener Position
- Fig.3: eine Stauvorrichtung mit Hubabschnitt in ausgefahrener Position

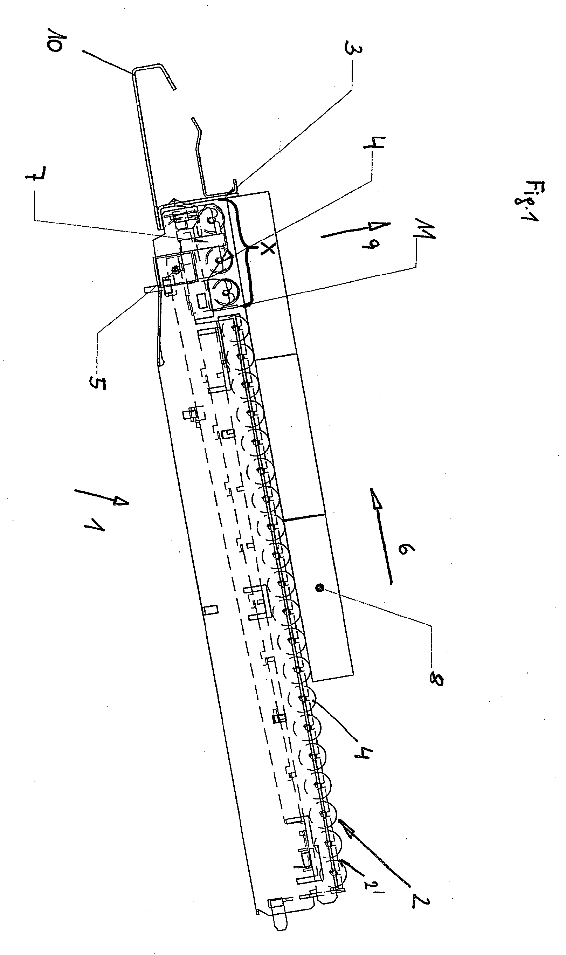

Fig.1 zeigt eine Stauvorrichtung 1 mit schräg geneigter Förderfläche 2, die an ihrem tiefsten Punkt durch einen Fixanschlag 3 begrenzt ist. Die Förderfläche 2 ist aus einer Vielzahl von Röllchen 4 gebildet. Ein Abschnitt X der Förderfläche 2 ist als Hubabschnitt ausgeführt. Der Hubabschnitt X ist über einen Hubzylinder 5 in eine Richtung 9 im wesentlichen rechtwinkelig zur Förderichtung 6 der Stauvorrichtung 1 bewegbar und gegen den Rest der Förderfläche 2 durch einen Hilfsanschlag 11 abgegrenzt. Der Hubabschnitt X umfasst im wesentlichen eine durch den Hubzylinder 5 bewegte Hubplatte (nicht gezeichnet), an welcher die anzuhebenden Röllchen 4 gelagert sind. Die durch den Hub bewegte Länge der Förderfläche kann beliebig verlängert oder verkürzt werden, indem mehr oder weniger Röllchen 4 an der Hubplatte gelagert werden, wobei die größtmögliche Länge, durch die Länge der Hubplatte vorgegeben ist. Jene Röllchen 4, welche nicht angehoben werden sollen, sind am fix angeordneten Gestell der Stauvorrichtung 1 gelagert. Die Hubplatte kann unterhalb der nicht angehobenen Röllchen 4 in Hubrichtung bewegt werden, ohne durch diese blockiert zu werden. Bei dieser Hubbewegung werden somit lediglich die an der Hubplatte gelagerten Röllchen 4 in Hubrichtung bewegt. So kann der Hubabschnitt X beispielsweise aus lediglich einem oder zwei Röllchen 4 bestehen. In diesem Fall müssen alle anderen die Förderfläche 2 bildenden Röllchen 4 am fix angeordneten Gestell gelagert werden. Alternativ dazu kann die Hubabschnitt X aber auch zehn Röllchen 4 aufweisen. In diesem Fall müssen im Vergleich zum vorigen Beispiel acht bzw. neun der fix am Gestell der Stauvorrichtung 1 gelagerten Röllchen an die Hubplatte montiert werden, so dass sie bei einer Hubbewegung der Hubplatte von dieser mitgenommen werden.

Im Bereich des Hubabschnitts X ist weiters ein Sensor 7 angeordnet, der zum Detektieren der Beladung des Hubabschnittes X vorgesehen ist. Jenseits der Fixanschlages 3 in Förderrichtung 6 gesehen ist des weiteren ein Übergabegestell 10 angeordnet, welches zum selbständigen Abrutschen von durch die Stauvorrichtung 1 beförderte Warenstücke 8 auf beispielsweise ein nachfolgendes Beförderungsmittel (nicht gezeichnet) dient.

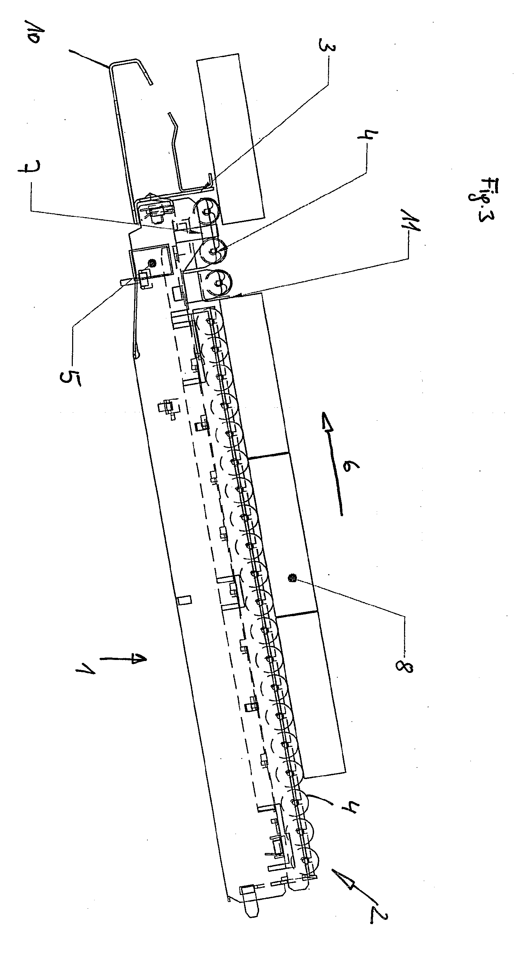

Der Betrieb der Stauvorrichtung 1 gestaltet sich so, dass die Warenstücke 8 auf die Förderfläche 2 bzw. die Röllchen 4 aufgelegt werden und durch die Schwerkraft in Richtung des Fixanschlags 3 befördert werden. Letzterer stoppt die Förderbewegung der Warenstücke 8. Durch Betätigung des Hubzylinders 5 wird sodann der Hubabschnitt X, also die Hubplatte samt den darauf gelagerten Röllchen 4 der Förderfläche 2 in Richtung 9 bewegt. Das am Hubabschnitt X befindliche Warenstück 8 wird dadurch mit seiner Unterkante über den höchsten Punkt des Fixanschlags 3 gehoben, wodurch es aufgrund der Schwerkraft auf das Übergabegestell 10 befördert wird (siehe Fig.3), von wo eine Weiterbeförderung auf nachfolgende Beförderungsmittel stattfinden kann. Der Hilfsanschlag 11 verhindert, dass nachrutschende Warenstücke 8 unter die Röllchen 4 des Hubabschnitts X rutschen und diesen beim zurückfahren in seine Ruheposition blockieren.

Nachdem über den Sensor 7 festgestellt wurde, dass das Warenstück 8 den Hubabschnitt X verlassen hat, wird über Betätigung des Hubzylinders 5 der Hubabschnitt X wieder in seine Ruheposition wie aus Fig.1 ersichtlich, bewegt.

## Patentansprüche

1. Stauvorrichtung (1) zur Aufnahme, Beförderung und stückweisen Ausgabe von Warenstücken (8), mit einer schräggestellten, in einem Gestell gehaltene Rollenbahn (2), die an ihrem unteren Ende einen Anschlag (3) aufweist, an welchem die entlang der Rollenbahn (2) heranbeförderten Warenstücke (8) zur Anlage kommen, wobei ein Auswerfer vorgesehen ist, **dadurch gekennzeichnet, dass** der Anschlag (3) gestellfest zur Rollenbahn (2) ausgebildet ist und der Auswerfer als ein im wesentlichen senkrecht zur Rollenbahn bewegbarer Hubabschnitt (X) ausgebildet ist, der zum Heben der einzelnen Warenstücke (8) über den Anschlag (3) vorgesehen ist, wobei dieser Hubabschnitt durch zumindest die letzte Rolle vor dem gestellfesten Anschlag (3) gebildet ist, vorzugsweise aber durch einen variablen Zusammenschluss einer Anzahl von Rollen vor dem Anschlag (3).

2. Stauvorrichtung gemäß Anspruch 1, **dadurch gekennzeichnet, dass** der Hubabschnitt (X) der Rollenbahn (2) an seinem in Förderrichtung (6) gesehen vorderen Ende mit einem mit diesem Abschnitt fest verbundenen Hilfsanschlag (11) versehen ist.

3. Stauvorrichtung gemäß Anspruch 1 oder 2, **dadurch gekennzeichnet, dass** im Bereich des Hubabschnittes (X) ein Sensor (7) zum Erfassen der Beladung des Hubabschnittes (X) mit einem Warenstück (8) vorgesehen ist.

4. Stauvorrichtung gemäß einem der Ansprüche 1 bis 3, **dadurch gekennzeichnet, dass** der Hubabschnitt (X) eine unterhalb des Niveaus einer durch die im Gestell der Rollenbahn (2) gelagerten Rollen (4) bestimmten Förderfläche (2') angeordnete und in ihrem gesamten Hub unterhalb dieser Rollen (4) bewegbare Hubplatte umfasst, auf der die anzuhebenden Rollen (4) drehbar gehalten sind.

5. Stauvorrichtung gemäß einem der Ansprüche 1 bis 4, **dadurch gekennzeichnet, dass** zum Antrieb der Hubplatte des Hubabschnittes (X) ein Hubzylinder (5) vorgesehen ist.
